# EUROPEAN PATENT APPLICATION

(11) **EP 3 379 184 A1**
(43) Date of publication of application: **26.09.2018**
(21) Application number: 16865917.5
(22) Date of filing: 07.11.2016
(51) Int. Cl.: F25D 29/00, F25D 23/00, F25D 23/02, F25D 27/00

(54) **REFRIGERATOR**

(30) Priority: 20.11.2015 JP 2015227173
(71) Applicant: Panasonic Intellectual Property Management Co., Ltd., Osaka-shi, Osaka 540-6207 (JP)
(72) Inventor: KAKITA, Kenichi, Osaka-shi, Osaka 540-6207 (JP); MORI, Kiyoshi, Osaka-shi, Osaka 540-6207 (JP); KAMISAKO, Toyoshi, Osaka-shi, Osaka 540-6207 (JP)
(74) Representative: Eisenführ Speiser
(86) International application number: PCT/JP2016/004818
(87) International publication number: WO 2017/085913

(57) **Abstract**

A refrigerator has drawer-type vegetable compartment door (106a). Receiving-side circuit unit (115) of wireless power supply device (113) is provided to vegetable compartment door (106a), and primary coil (124) of transmission-side circuit unit (114) is provided to heat insulating partition plate (109) which is provided to a housing and which faces secondary coil (126) of reception-side circuit unit (115).

## Description

### TECHNICAL FIELD

The present invention relates to a refrigerator having an electric control load mounted on a door of a storage compartment.

### BACKGROUND ART

Recently, due to dietary changes and increase of suburban large supermarkets, daily shopping habits have been reduced, and people tend to buy groceries for one week in bulk and store the groceries into a refrigerator, for example. In addition, older people using a relatively large refrigerator have been increasing. For such a user, the total weight of the groceries the user bought in bulk and a door is heavy, and thus, opening and closing of a storage compartment is likely to be a burden to such a user.

To address such a problem of opening and closing a storage compartment having a manual door, there has been proposed a refrigerator for reducing a burden of opening and closing a drawer door of a compartment, wherein the door is automatically opened by an actuator using a solenoid, and an operation unit for the actuator is provided on the front surface of the door which is to be opened (for example, see PTL 1).

FIG. 11 is a longitudinal sectional view of the conventional refrigerator disclosed in PTL 1, in a state where a drawer door of freezer compartment 2 of the refrigerator is closed, and FIG. 12 is an exploded perspective view illustrating a part of the conventional refrigerator disclosed in PTL 1 where a door opening unit is mounted. In FIGS. 11 and 12, door opening unit 15 is embedded into partition wall 13, and when solenoid 18 inside door opening unit 15 is energized, a tip of pushing rod 23 extends forward through plunger 22 to open freezer compartment door 9. A trigger signal for causing door opening unit 15 to open the door is transmitted such that, due to switch 16 being pushed, a built-in magnet comes close to a magnetic sensor, such as a Hall IC, on partition wall 13. In response to the trigger signal described above, a control microcomputer on a main body determines that a user performs an operation for opening the door.

However, in the above-described conventional configuration, freezer compartment door 9 is a drawer door, so that it is extremely difficult to establish an electric connection between a housing and the drawer door. When wire harness connection is applied, a user cannot remove the drawer door for cleaning or maintenance, for example. Even if the housing and the drawer door are connected by using a wire harness, the wire harness is repeatedly bent, extended and contracted, and receives impact due to a temperature difference, which may degrade reliability of the refrigerator. Therefore, it is common to use a mechanical switch for a trigger signal for a door opening operation for opening a door by an automatic opening and closing mechanism such as door opening unit 15, as is conventionally applied. However, the conventional configuration using a mechanical switch needs a constant operation stroke and operation force for operating the switch, and thus, is inferior in operability for generating a trigger signal for opening the door from the viewpoint of universal design (UD). Further, when holding groceries in both hands, for example, it is difficult for a user to operate the switch. In such a case, the user needs to once put down the groceries the user carries, to operate the switch.

### Citation List

### Patent Literature

PTL 1: Unexamined Japanese Patent Publication No. 2009-144931

### SUMMARY OF THE INVENTION

The present disclosure has been made in view of the above-mentioned problem, and provides a refrigerator having high operational UD performance such that an operation for opening and closing a door is enabled only by a touch on the door, for example, and a refrigerator having high reliability.

Specifically, a refrigerator according to one example of an exemplary embodiment of the present disclosure includes a housing formed of a heat insulating wall, a plurality of storage compartments provided in the housing, and a plurality of doors which openably closes the plurality of storage compartments. The refrigerator according to one example of the exemplary embodiment of the present disclosure also includes a wireless power supply device that supplies power to a control load, such as an operation unit, provided to at least one of the plurality of doors. The wireless power supply device includes a transmission-side circuit unit and a reception-side circuit unit, wherein the transmission-side circuit unit is disposed to the housing, and the reception-side circuit unit is disposed to the door.

According to this configuration, power can be supplied to the door from the housing in a wireless manner without a need of a harness or the like, whereby an electric control load can be mounted to the door. Thus, the configuration described above enables mounting an electric interface device such as a capacitive touch sensor to the door, thereby being capable of providing a refrigerator having improved operational UD performance such that an operation for opening the door is enabled only by a touch on the door, for example, and a refrigerator having high reliability without worry about damage on the harness, for example.

### BRIEF DESCRIPTION OF DRAWINGS

FIG. 1 is a front view of a refrigerator according to a first exemplary embodiment of the present disclosure.
FIG. 2A is a sectional view, taken along line 2A-2A, of a vegetable compartment, in FIG. 1, of the refrigerator according to the first exemplary embodiment of the present disclosure.
FIG. 2B is a perspective view illustrating a part of the refrigerator where the vegetable compartment is mounted according to the first exemplary embodiment of the present disclosure.
FIG. 3 is a partially enlarged view of a housing of the refrigerator according to the first exemplary embodiment of the present disclosure.
FIG. 4 is a schematic diagram illustrating a configuration of part A, in FIG. 2A, of the refrigerator according to the first exemplary embodiment of the present disclosure.
FIG. 5 is a perspective view of an appearance of a reception-side circuit unit of the refrigerator according to the first exemplary embodiment of the present disclosure.
FIG. 6 is a flowchart illustrating an operation of the refrigerator according to the first exemplary embodiment of the present disclosure.
FIG. 7 is a longitudinal sectional view illustrating a vegetable compartment of a refrigerator according to a second exemplary embodiment of the present disclosure, in a state where a door is opened.
FIG. 8 is a schematic diagram illustrating a configuration of part B, in FIG. 7, of a refrigerating compartment according to the second exemplary embodiment of the present disclosure.
FIG. 9 is a flowchart illustrating an operation of the refrigerator according to the second exemplary embodiment of the present disclosure.
FIG. 10 is a flowchart illustrating another operation of the refrigerator according to the second exemplary embodiment of the present disclosure.

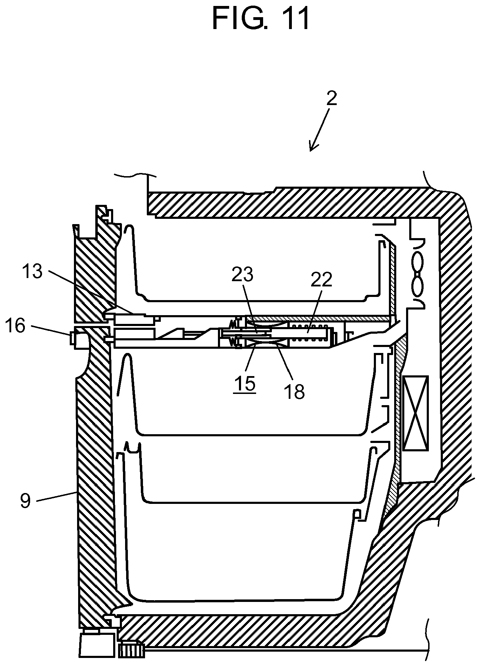

FIG. 11 is a longitudinal sectional view illustrating a part of a conventional refrigerator where a freezer compartment having a drawer door is mounted, in a state where the door is closed.

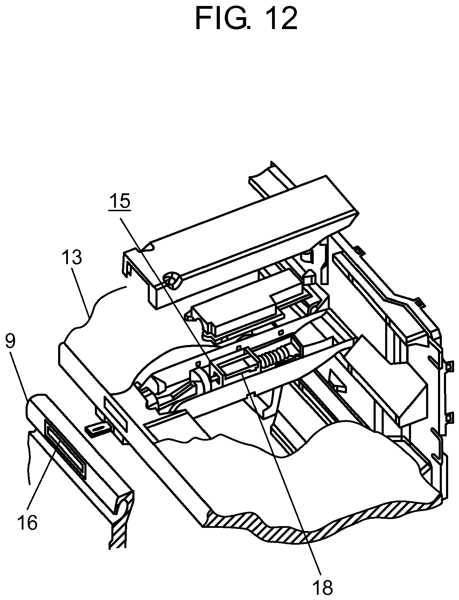

FIG. 12 is an exploded perspective view illustrating a part of the conventional refrigerator where a door opening unit is provided.

### DESCRIPTION OF EMBODIMENTS

Hereinafter, examples of exemplary embodiments of the present disclosure will be described with reference to the drawings. Note that the present invention is not limited by the exemplary embodiments.

### (First exemplary embodiment)

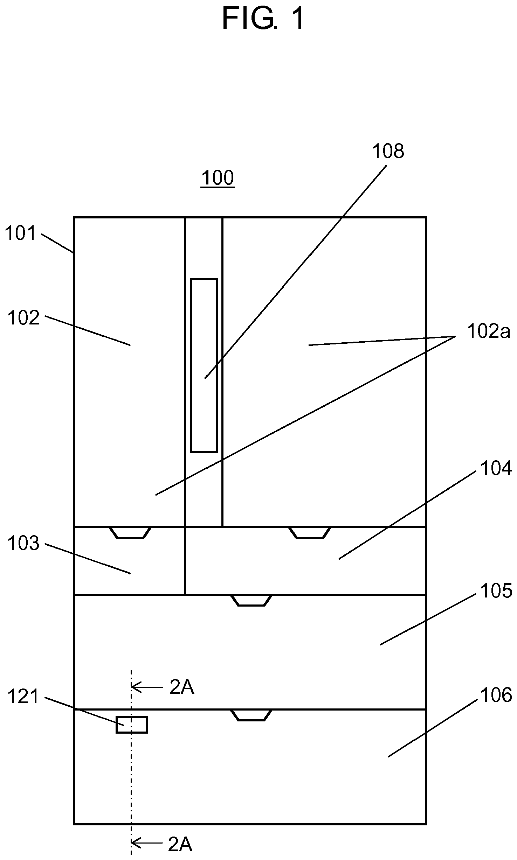

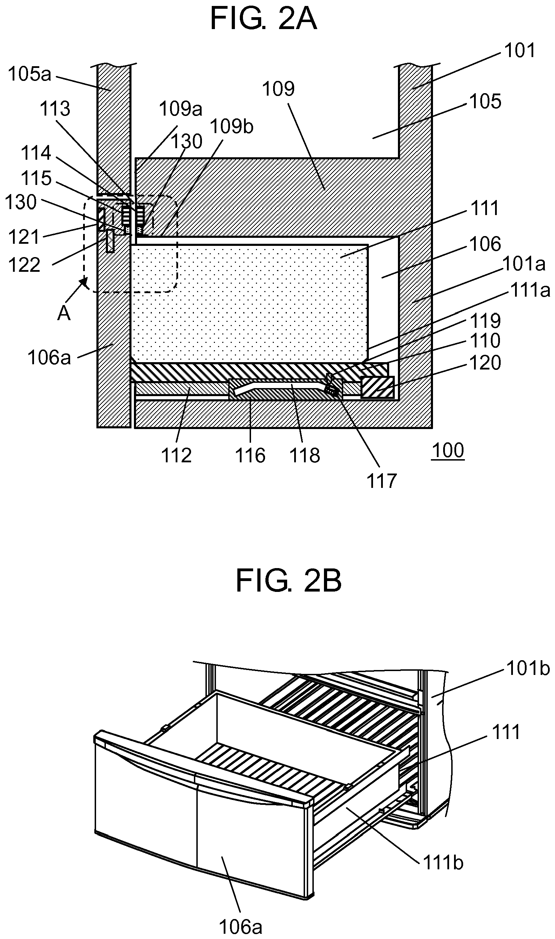

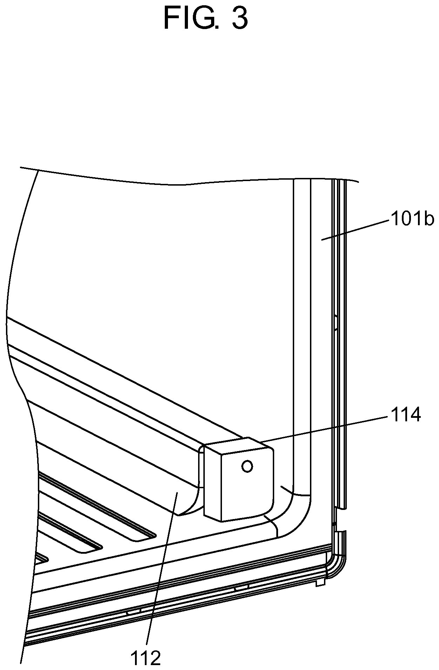

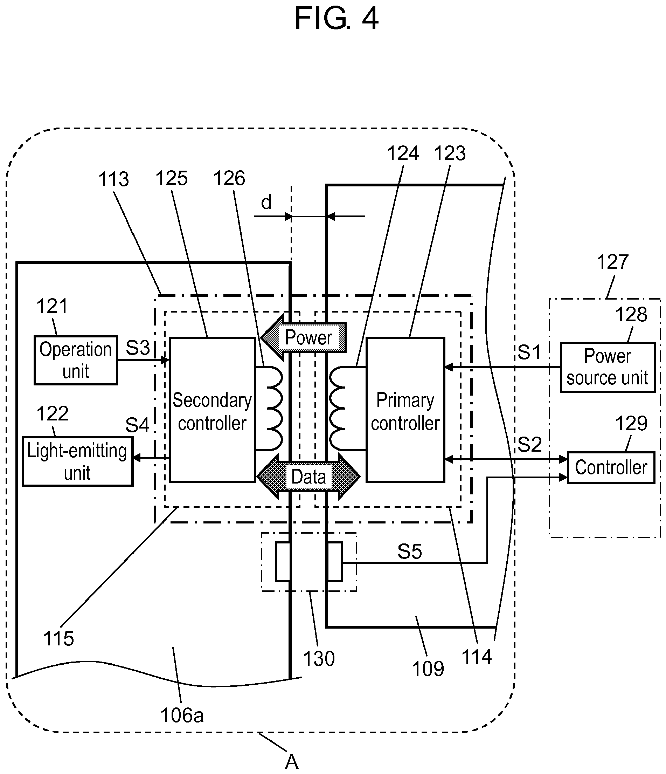

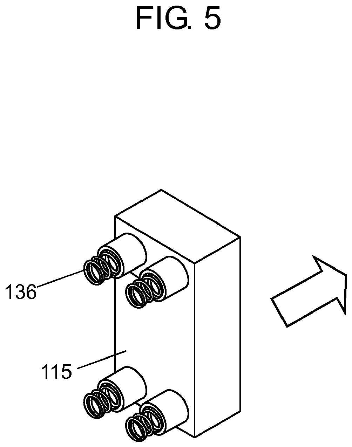

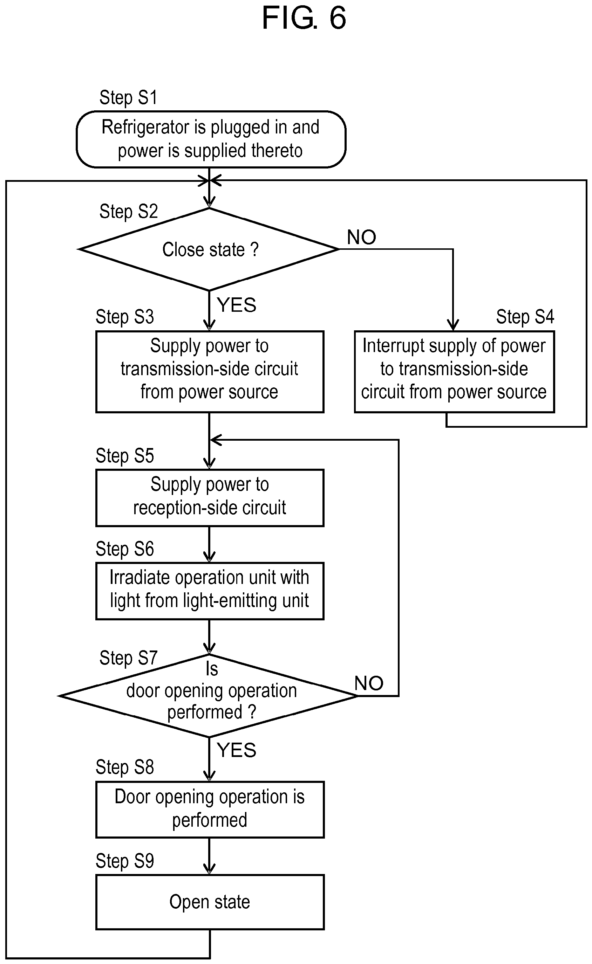

FIG. 1 is a front view of a refrigerator according to a first exemplary embodiment of the present disclosure. FIG. 2A is a sectional view, taken along line 2A-2A, of a vegetable compartment, in FIG. 1, of the refrigerator according to the first exemplary embodiment of the present disclosure, and FIG. 2B is a perspective view illustrating a part of the refrigerator where the vegetable compartment is mounted according to the first exemplary embodiment of the present disclosure. FIG. 3 is a partially enlarged view of a housing of the refrigerator according to the first exemplary embodiment of the present disclosure. FIG. 4 is a schematic diagram illustrating a configuration of part A, in FIG. 2A, of the refrigerator according to the first exemplary embodiment of the present disclosure, and FIG. 5 is a perspective view of an appearance of a reception-side circuit unit of the refrigerator according to the first exemplary embodiment of the present disclosure. FIG. 6 is a flowchart illustrating an operation of the refrigerator according to the first exemplary embodiment of the present disclosure.

In FIGS. 1 to 3, refrigerator 100 according to the present exemplary embodiment has housing 101, which includes an outer box formed by mainly using a steel plate, an inner box made of resin such as acrylonitrile-butadiene-styrene (ABS) resin, and an insulating material filled between the outer box and the inner box.

Housing 101 is partitioned into a plurality of storage compartments in an insulated manner. The uppermost compartment is refrigerating compartment 102, and below refrigerating compartment 102, ice making compartment 103 and switching compartment 104 are provided side by side. Below ice making compartment 103 and switching compartment 104, freezer compartment 105 and vegetable compartment 106 which is the lowermost compartment are disposed respectively. Heat insulating doors are provided to the front surfaces of the respective storage compartments in a front surface opening of housing 101 in order to separate the respective compartments from ambient air. Refrigerating compartment door 102a which is a heat insulating door of refrigerating compartment 102 is a double door. Display operation unit 108 is provided near the central part of refrigerating compartment door 102a, and a user can make various settings, such as setting of temperatures in the respective storage compartments of the refrigerator and setting for ice-making and quick cooling, by means of display operation unit 108.

A compressor and components for a freezing cycle such as a dryer for water removal are stored in a machine chamber provided in a rear area in an uppermost part of refrigerating compartment 102. A cooling compartment for generating cool air is provided behind freezer compartment 105. A cooler and a cooling fan are disposed in the cooling compartment. The cooling fan blows cool air cooled by the cooler to refrigerating compartment 102, ice making compartment 103, switching compartment 104, freezer compartment 105, and vegetable compartment 106. Further, an air volume control damper that controls a volume of air from the cooling fan is provided in an air passage. Moreover, components such as a radiant heater, a drain pan, and a drain tube evaporation pan are provided in housing 101 for removing frost and ice attached to the cooler and areas around the cooler.

In order to refrigerate and store foodstuffs, temperature of refrigerating compartment 102 is normally set to 1°C to 5°C under a condition that temperature which does not freeze the foodstuffs is set as the lower limit. Vegetable compartment 106 which is the lowermost compartment is set to 2°C to 7°C which is equal to or slightly higher than the temperature of refrigerating compartment 102. Further, freezer compartment 105 is set to have a freezing temperature zone, and is normally set to have a temperature of -22°C to -15°C in order to freeze and store the foodstuffs. In some cases, freezer compartment 105 may be set to have a lower temperature, such as -30°C to -25°C, for example, in order to improve a frozen storage state.

Ice making compartment 103 makes ice by an automatic icemaker provided on an upper part of ice making compartment 103 by using water sent from a water storage tank in refrigerating compartment 102, and stores the ice in an ice storage container disposed at a lower part of ice making compartment 103.

Switching compartment 104 is configured such that the temperature thereof can be switched to a preset temperature zone between a refrigerating temperature zone and a freezing temperature zone, in addition to the refrigerating temperature zone set as 1°C to 5°C, the vegetable temperature zone set as 2°C to 7°C, and the freezing temperature zone usually set as -22°C to -15°C. Switching compartment 104 is a storage compartment arranged adjacent to ice making compartment 103 and provided with an independent door, and is often provided with a drawer door.

It should be noted that, while switching compartment 104 is configured as a storage compartment which can be set to have a temperature in a temperature zone between the refrigerating temperature zone and the freezing temperature zone in the present exemplary embodiment, switching compartment 104 may be configured such that the temperature of switching compartment 104 can be switched only in the temperature zone which is intermediate between the refrigerating temperature zone and the freezing temperature zone by leaving the refrigerating function to refrigerating compartment 102 and vegetable compartment 106 and the freezing function to freezer compartment 105. In addition, switching compartment 104 may be configured as a storage compartment having a specific temperature zone, for example, the freezing temperature zone, considering that there is increased demand for frozen food in recent years, for example.

Storage case 111 supported by frame 110 is mounted to vegetable compartment door 106a. Drawer rail 112 is fixed to an inner wall of vegetable compartment 106, and frame 110 is configured to slide on drawer rail 112. Frame 110 and vegetable compartment door 106a are integrally formed, so that frame 110 and storage case 111 move with the opening and closing movement of vegetable compartment door 106a.

Further, door opening and closing unit 116 is provided on the inner wall of vegetable compartment 106 near drawer rail 112. Door opening and closing unit 116 includes a motor and a gear mechanism, and transmits power of the motor to link 117. Link 117 has a recessed shape, and moves along guide 118 in door opening and closing unit 116. Frame 110 is provided with protrusion 119. When protrusion 119 is engaged with the recessed part of link 117, frame 110 moves with the movement of link 117.

It should be noted that guide 118 is not configured to have a simple linear shape, but to have a section slightly tilted downward on a front part and a rear part of the linear shape such that the engagement between link 117 and protrusion 119 is released in a state where vegetable compartment door 106a is closed, as illustrated in FIG. 2A. The reason why guide 118 is configured as described above is to allow the engagement between link 117 and protrusion 119 to be released in a state where vegetable compartment door 106a is closed, because, when the user opens vegetable compartment door 106a not automatically but manually in a state where link 117 and protrusion 119 are constantly engaged with each other, the gear mechanism or the motor in door opening and closing unit 116 becomes a load, and force stronger than usual is required to open the door.

An automatic opening and closing operation of vegetable compartment door 106a will now be described.

Firstly, when a door opening operation is started by door opening and closing unit 116 under the control of controller 129 (see FIG. 4), link 117 and protrusion 119 are engaged with each other in the linear section of guide 118, so that vegetable compartment door 106a is opened with the action of link 117. When vegetable compartment door 106a is opened in a fixed opening and closing amount, link 117 moves to the section of guide 118 slightly tilted downward, by which the engagement between link 117 and protrusion 119 is released and vegetable compartment door 106a is further opened a little through inertia and stopped.

In a door closing operation, an operation reverse to the automatic door opening operation described above is performed. Specifically, the automatic door closing operation is started when the user closes vegetable compartment door 106a to a position where protrusion 119 can be engaged with link 117. That is, link 117 and protrusion 119 are engaged with each other, and link 117 moves in a direction in which vegetable compartment door 106a is closed. When the door is closed, the engagement between link 117 and protrusion 119 is released, and vegetable compartment door 106a waits until the door opening operation is started in a state where vegetable compartment door 106a can be opened both automatically and manually, as illustrated in FIG. 2A.

Airtightness holding mechanism 120 is provided at the rear part of vegetable compartment 106 for improving airtightness of vegetable compartment 106 when vegetable compartment door 106a is in a close state. Airtightness holding mechanism 120 is configured to draw frame 110 in a direction of closing the door with force not interfering with the opening of the door by using a spring or an inclination of a rail, for example. Note that airtightness holding mechanism 120 may be provided inside door opening and closing unit 116.

According to the configuration described above, frame 110, vegetable compartment door 106a, and storage case 111 are connected to one another and move in conjunction with one another, whereby vegetable compartment door 106a can be automatically opened and closed by door opening and closing unit 116.

While the present exemplary embodiment describes the automatic opening and closing operation for drawer-type vegetable compartment door 106a as one example, a door which is to be automatically opened and closed is not limited to a drawer door. As described above, regarding a drawer door, it is extremely difficult to establish an electric connection between a housing and the drawer door, and thus, the present exemplary embodiment has described the automatic opening and closing operation by using a difficult example. However, the present disclosure is applicable to opening and closing doors having other specifications such as a double door.

Operation unit 121 for generating a trigger signal for starting the automatic opening and closing operation by door opening and closing unit 116 is provided on the front surface of vegetable compartment door 106a. Operation unit 121 is provided with, as an interface, a capacitive touch sensor sensitive to a user's touch operation, a resistive touch sensor that provides a light operational feeling, an optical distance sensor or human presence sensor, or a speech recognition device, for example. Light-emitting unit 122 that indicates the position of operation unit 121 by light from a light-emitting diode (LED) or the like may be provided near operation unit 121 for allowing the user to easily recognize the position to be operated. The present exemplary embodiment describes an example where refrigerator 100 is provided with light-emitting unit 122.

Further, transmission-side circuit unit 114 is provided inside of or on a surface of heat insulating partition plate front surface 109a, which faces an inner wall of vegetable compartment door 106a, of heat insulating partition plate 109 between vegetable compartment 106 and freezer compartment 105. In addition, reception-side circuit unit 115 is provided inside of or on a surface of the inner wall of vegetable compartment door 106a facing heat insulating partition plate 109. Transmission-side circuit unit 114 and reception-side circuit unit 115 constitute wireless power supply device 113.

It is to be noted that transmission-side circuit unit 114 is not limited to be provided inside of or on the surface of heat insulating partition plate front surface 109a of heat insulating plate 109 facing vegetable compartment door 106a, and may be provided inside of or on a surface of a portion of housing 101 where vegetable compartment 106 is disposed. For example, transmission-side circuit unit 114 may be provided inside of or on a surface of a portion of rear wall 101a of housing 101 behind vegetable compartment 106.

In addition, transmission-side circuit unit 114 may be provided inside of or on a surface of a portion of side wall 101b of housing 101 where vegetable compartment 106 is disposed (see FIG. 2B). Further, transmission-side circuit unit 114 may be provided inside of or on inner surface 109b of heat insulating partition plate 109 facing vegetable compartment 106 near the front surface opening, or inside of or on a surface of a bottom plate of housing 101 near the front surface opening.

Transmission-side circuit unit 114 may also be provided at a position in a free space in housing 101 where circuit unit 114 does not interfere with the opening and closing movement of storage case 111. For example, as illustrated in FIG. 3, in a state of being stored in a storage case or the like, transmission-side circuit unit 114 may be provided at a position facing vegetable compartment door 106a in a free space in housing 101, for example, in a space between an inner surface of vegetable compartment door 106a which is in a close state and a tip of drawer rail 112 facing the front surface opening, or in a space above drawer rail 112 near the front surface opening.

Also, reception-side circuit unit 115 is not limited to be provided inside of or on the surface of the inner wall of vegetable compartment door 106a facing heat insulating partition plate 109, and may be provided inside of or on a surface of storage case rear wall 111a in vegetable compartment 106 (see FIG. 2A). In this case, it is desirable that reception-side circuit unit 115 is provided at a position facing transmission-side circuit unit 114 provided on rear wall 101a of housing 101 when vegetable compartment door 106a is in a close state. Also, when transmission-side circuit unit 114 is provided on the portion of side wall 101b of housing 101 where vegetable compartment 106 is disposed, reception-side circuit unit 115 may be provided inside of or on a surface of storage case side wall 111b (see FIG. 2B) at a position facing transmission-side circuit unit 114 when vegetable compartment door 106a is in a close state.

Reception-side circuit unit 115 may also be provided in storage case 111 at a position facing transmission-side circuit unit 114 provided on inner surface 109b (see FIG. 2A) of heat insulating partition plate 109 facing vegetable compartment 106 near the front surface opening, or provided at a position on the outer side of the bottom surface of storage case 111 facing transmission-side circuit unit 114 provided on the bottom plate of housing 101 near the front surface opening. In addition, reception-side circuit unit 115 may be provided at a position facing transmission-side circuit unit 114 provided in a free space in housing 101 (for example, in a space between the tip of drawer rail 112 facing the front surface opening and vegetable compartment door 106a or in a space above drawer rail 112 near the front surface opening).

Next, an electric connection structure around wireless power supply device 113 will be described with reference to FIG. 4. The closed state is maintained through a gasket (not illustrated) with distance d between heat insulating partition plate 109 and vegetable compartment door 106a in order to ensure airtightness and absorb impact upon closing vegetable compartment door 106a. Door opened and closed state detector 130 detects the closed state. Door opened and closed state detector 130 generally includes a pair of a magnetic sensor, such as a Hall IC, provided on heat insulating partition plate 109 and a magnetic body, such as a magnet, provided on vegetable compartment door 106a for performing electric detection, but door opened and closed state detector 130 may be configured by a mechanical switch in which, when a distance is equal to or larger than distance d, contacts are separated, and when the distance becomes equal to d, the contacts come into contact with each other. Note that door opened and closed state detector 130 is not limited to be provided on heat insulating partition plate 109 and vegetable compartment door 106a. For example, door opened and closed state detector 130 may be provided on a portion of housing 101 behind vegetable compartment 106 and on the rear of storage case 111 (see FIG. 2A), or on the portion of side wall 101b of housing 101 where vegetable compartment 106 is disposed and on storage case side wall 111b (see FIG. 2B). Door opened and closed state detector 130 may also be provided near the front surface opening on inner surface 109b of heat insulating partition plate 109 facing vegetable compartment 106, or on the bottom plate of housing 101 near the front surface opening.

As illustrated in FIG. 4, transmission-side circuit unit 114 includes primary controller 123 and primary coil 124. In the present exemplary embodiment, primary coil 124 is disposed inside heat insulating partition plate front surface 109a (see FIG. 2A) of heat insulating partition plate 109 facing vegetable compartment door 106a so as to be located on an inward position of heat insulating partition plate 109 from heat insulating partition plate front surface 109a with a minimum distance for ensuring insulation. Power source unit 128 and controller 129 are provided in main body control circuit board 127. Power S1 is supplied to primary controller 123 from power source unit 128, and signal S2 is transmitted and received between controller 129 and primary controller 123. Controller 129 also receives signal S5, which includes information about a door opened and closed state detected by door opened and closed state detector 130, from door opened and closed state detector 130.

As illustrated in FIG. 4, reception-side circuit unit 115 includes secondary controller 125 and secondary coil 126. Secondary coil 126 is disposed such that, when vegetable compartment door 106a is closed, the surface of the inner wall of vegetable compartment door 106a is on a position (in the same straight line) equidistant from the center of secondary coil 126 and the center of primary coil 124 between the center of secondary coil 126 and the center of primary coil 124. Secondary coil 126 is also disposed such that the distance between the surface of the inner wall of vegetable compartment door 106a and the portion of secondary coil 126 closest to the surface of inner wall of vegetable compartment door 106a becomes the minimum distance (insulation distance) for ensuring insulation. Secondary controller 125 receives signal S3 from operation unit 121 and outputs signal S4 to light-emitting unit 122.

It is desirable that primary coil 124 and secondary coil 126 are designed to have a shape according to a location and space where primary coil 124 and secondary coil 126 are installed. That is, primary coil 124 and secondary coil 126 are desirably designed in such a shape that primary coil 124 and secondary coil 126 can be disposed in a limited space and the highest power supply efficiency can be obtained. For example, a spiral disc-shaped or elliptic coil such as a mosquito coil, a long helical coil such as a spring, or a rectangular coil is used for primary coil 124 and secondary coil 126.

It is to be noted that, when transmission-side circuit unit 114 and reception-side circuit unit 115 both include a coil as in the present exemplary embodiment, it is important to position primary coil 124 in transmission-side circuit unit 114 and secondary coil 126 in reception-side circuit unit 115. That is, if positions of primary coil 124 and secondary coil 126, which face each other, are respectively displaced in a state where the door having reception-side circuit unit 115 mounted thereto is closed, power supply efficiency is deteriorated.

It is preferable that, in order to efficiently supply power between primary coil 124 and secondary coil 126 even if the position of at least one of primary coil 124 and secondary coil 126 is displaced a little, an area of a surface of the one of primary coil 124 and secondary coil 126 facing the other coil is larger than an area of the surface of the other coil facing the one of primary coil 124 and secondary coil 126.

For example, if it is difficult to ensure a space for installing primary coil 124 of transmission-side circuit unit 114 in housing 101, the area of the surface of secondary coil 126 of reception-side circuit unit 115 facing primary coil 124 of transmission-side circuit unit 114 is preferably formed larger than the area of the surface of primary coil 124 facing secondary coil 126. According to this configuration, if the position of one of primary coil 124 and secondary coil 126 which face each other is displaced, wireless power supply can be efficiently performed.

On the other hand, if a space for installing primary coil 124 of transmission-side circuit unit 114 is sufficiently ensured in housing 101, the area of the surface of primary coil 124 of transmission-side circuit unit 114, on housing 101, facing secondary coil 126 of reception-side circuit unit 115 is preferably formed larger than the area of the surface of secondary coil 126 facing primary coil 124, considering that the position of secondary coil 126 of reception-side circuit unit 115 provided to vegetable compartment door 106a is more likely to be displaced. According to this configuration, if the position of one of primary coil 124 and secondary coil 126 which face each other is displaced, wireless power supply can be efficiently performed.

In addition, a guide or the like may be provided to vegetable compartment door 106a and housing 101 for more reliably positioning primary coil 124 and secondary coil 126 with respect to each other.

FIG. 5 is a perspective view of an appearance of the reception-side circuit unit of the refrigerator according to the exemplary embodiment of the present disclosure. As illustrated in FIG. 5, reception-side circuit unit 115 on refrigerator 100 according to the present exemplary embodiment may be provided with springs 136 for enhancing wireless power supply efficiency. In this case, springs 136 are provided on the surface of reception-side circuit unit 115 opposite to the surface facing transmission-side circuit unit 114. Springs 136 bias reception-side circuit unit 115 having secondary coil 126 toward the surface of vegetable compartment door 106a facing housing 101 (in a direction indicated by an arrow in FIG. 5).

More specifically, reception-side circuit unit 115 may be provided such that, due to an action of springs 136, an end face of reception-side circuit unit 115 facing transmission-side circuit unit 114 protrudes outward by several millimeters, for example, from the surface of vegetable compartment door 106a facing housing 101. According to this configuration, when vegetable compartment door 106a is closed, the end face of housing 101 (in the present exemplary embodiment, heat insulating partition plate front surface 109a) is first brought into contact with the end face of reception-side circuit unit 115, whereby springs 136 are pushed until the surface of vegetable compartment door 106a facing housing 101 and the end face of housing 101 are brought into contact with each other. Thus, reception-side circuit unit 115 can be brought into close contact with transmission-side circuit unit 114, whereby the distance between primary coil 124 and secondary coil 126 can be decreased.

As described above, due to springs 136 being provided to reception-side circuit unit 115, primary coil 124 and secondary coil 126 can be brought into contact with each other with high accuracy when the door is closed, which can suppress deterioration in wireless power supply efficiency due to troubles caused by manufacturing tolerances such as the distance between reception-side circuit unit 115 and transmission-side circuit unit 114 being too long.

Hereinafter, the manner of operation and effects of refrigerator 100 having the above-mentioned configuration will be described with reference to the flowchart in FIG. 6.

Firstly, when refrigerator 100 is plugged in and power is supplied to refrigerator 100, main body control circuit board 127 starts the operation in step S1. Next, in step S2, door opened and closed state detector 130 detects an opened and closed state of vegetable compartment door 106a, and determines whether or not vegetable compartment door 106a is in a close state. If vegetable compartment door 106a is in a close state, door opened and closed state detector 130 outputs information indicating that vegetable compartment door 106a is in a close state to controller 129 as signal S5, and the logic of the flowchart proceeds to step S3. If vegetable compartment door 106a is in an open state, door opened and closed state detector 130 outputs information indicating that vegetable compartment door 106a is in an open state to controller 129 as signal S5, and the logic proceeds to step S4. In step S3, controller 129 determines that vegetable compartment door 106a is in a close state, and activates power source unit 128 to output signal S1 for supplying power to primary controller 123. Then, the logic proceeds to step S5. In step S4, controller 129 determines that vegetable compartment door 106a is in an open state, and interrupts supply of power from power source unit 128. Then, the logic returns to step S2.

Next, in step S5, an alternating current waveform with prescribed voltage and frequency is applied to primary coil 124 from primary controller 123 to induce an alternating current waveform on secondary coil 126. The induced voltage is rectified by secondary controller 125, and reception-side circuit unit 115 is supplied with power. Then, the logic proceeds to step S6.

In the present exemplary embodiment, an electromagnetic induction system with an output of several W and a frequency of several hundred kHz is preferable as a power supply system, from the viewpoint that the distance between primary coil 124 and secondary coil 126 is short and that the positions of primary coil 124 and secondary coil 126 are fixed. However, the power supply system is not limited thereto, and a magnetic field resonance system with a frequency of several MHz or a radio wave system in which radio waves are recovered and used as power may be employed.

In step S6, power and lighting information are output to light-emitting unit 122 from secondary controller 125 as signal S4. Light-emitting unit 122 disposed near operation unit 121 informs the user of the position of operation unit 121 by irradiating operation unit 121 with illumination such as LED, for example, with a color, a graphic, a lighting pattern, or the like, in order that the user can easily recognize the position of operation unit 121.

Next, in step S7, secondary controller 125 determines, based on signal S3 input from operation unit 121, whether or not the user performs a door opening operation for opening vegetable compartment door 106a by operating operation unit 121. If the door opening operation is performed, the logic proceeds to step S8, and if not, the logic returns to step S5 where refrigerator 100 waits until the door opening operation is performed.

In step S8, information indicating that the door opening operation is performed is transmitted from secondary controller 125 to primary coil 124 by way of secondary coil 126 through data communication, and further transmitted to primary controller 123. Further, when signal S2 is output from primary controller 123 to controller 129, controller 129 activates door opening and closing unit 116 (see FIG. 2A).

Since the present exemplary embodiment uses the electromagnetic induction system, examples of a specific data communication method include a method in which a signal frequency of a micro voltage different from the power frequency of a power alternating current waveform is superimposed. There is also a method in which a rectangular wave with a constant frequency is used as a power waveform, and the frequency is changed only during data transfer. Alternatively, due to the configuration of refrigerator 100 in which power can be supplied to vegetable compartment door 106a, a simple infrared communication device configured by an LED and a photodiode can be used, for example, to enable reduction in time for designing a complicated control algorithm and for circuit verification, although a new device is additionally needed.

Next, in step S9, door opened and closed state detector 130 confirms that vegetable compartment door 106a is in an open state, and the logic returns to step S2.

As described above, refrigerator 100 according to the present exemplary embodiment includes housing 101 formed of a heat insulating wall, a plurality of storage compartments (including vegetable compartment 106) provided in housing 101, a plurality of doors that openably closes the plurality of storage compartments, and wireless power supply device 113 that supplies power to a control load such as operation unit 121 provided on at least one of the plurality of doors. Wireless power supply device 113 has transmission-side circuit unit 114 and reception-side circuit unit 115, wherein transmission-side circuit unit 114 is disposed to housing 101, and reception-side circuit unit 115 is disposed to at least one (vegetable compartment door 106a) of the plurality of doors.

According to the configuration described above, power can be wirelessly supplied to at least one (vegetable compartment door 106a) of the plurality of doors from housing 101 without using a harness. Thus, a control load, an operation interface, or the like that needs an electric connection can be mounted even to a door (for example, vegetable compartment door 106a which is a drawer door) that is difficult to establish an electric connection with housing 101 by means of a harness or the like in a state where the door is open. Accordingly, improvement in operability and excellent UD performance can be implemented regarding a door opening and closing operation and a display on operation unit 121, for example. In addition, since a harness or the like is not used for an electric connection, a refrigerator having high reliability with no worry about damage of a harness or the like can be provided.

In the present exemplary embodiment, vegetable compartment door 106a which is a drawer door has been described as one example of at least one of the plurality of doors. However, at least one of the plurality of doors may be other doors such as freezer compartment door 105a, and also, it is not limited to a drawer door, and may be a double door, for example.

To close the door, information indicating that the door closing operation is performed is transmitted to controller 129 provided in housing 101 from operation unit 121 provided on the door, by wireless power supply device 113, due to, for example, an infrared communication mechanism including an LED and a photodiode being provided to at least one of the plurality of doors and housing 101 as described above, and controller 129 drives door opening and closing unit 116 to automatically close the door.

As described above, the present disclosure is not limited to be applied to a drawer door, but is widely applicable to a refrigerator having a door which can be automatically opened and closed.

In addition, in refrigerator 100 according to the present exemplary embodiment, primary coil 124 of transmission-side circuit unit 114 in wireless power supply device 113 is disposed inside of or on a surface of heat insulating partition plate front surface 109a of heat insulating partition plate 109 facing an inner wall of vegetable compartment door 106a. Further, secondary coil 126 of reception-side circuit unit 115 in wireless power supply device 113 is disposed inside of or on a surface of a wall of vegetable compartment door 106a facing primary coil 124 of transmission-side circuit unit 114 (facing heat insulating partition plate 109 in the present exemplary embodiment). According to this configuration, the distance between primary coil 124 and secondary coil 126, that is, the distance between a transmission coil and a reception coil, can be made minimum. Therefore, the present exemplary embodiment enables very efficient power transfer by wireless power supply device 113, thereby being capable of providing a refrigerator that can wirelessly supply power to a door with less power consumption.

Further, in the present exemplary embodiment, wireless power supply device 113 is provided at a position (heat insulating partition plate 109, for example) that does not cause a reduction in space inside the refrigerator, whereby wireless power supply device 113 can be provided without reducing a space inside the refrigerator.

Moreover, in refrigerator 100 in the present exemplary embodiment, primary coil 124 and secondary coil 126 which are provided in a limited space of housing 101 and the door may be configured to have a coil shape which enables installment of primary coil 124 and secondary coil 126 in a limited space and can implement high power supply efficiency. According to this configuration, a refrigerator which can be provided with wireless power supply device 113 without reducing a space inside the refrigerator can be provided.

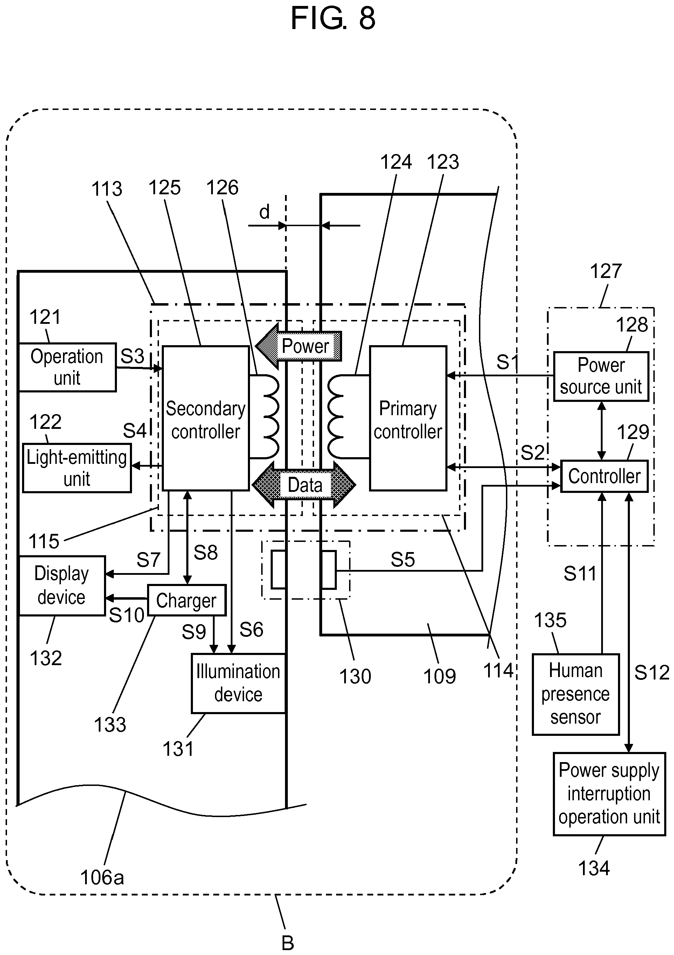

Refrigerator 100 according to the present exemplary embodiment may also be configured such that door opened and closed state detector 130 that detects an opened and closed state of vegetable compartment door 106a is provided to at least one of housing 101 and at least one (vegetable compartment door 106a) of the plurality of doors, and wireless power supply device 113 may be controlled by controller 129 based on signal S5 from door opened and closed state detector 130. According to this configuration, whether vegetable compartment door 106a is in a close state or open state can reliably be determined by controller 129, whereby, in the open state where power cannot be supplied due to the distance between the transmission coil and the reception coil being long, power supply from power source unit 128 to wireless power supply device 113 can be stopped. Thus, unnecessary power consumption can be reduced, whereby power source capacitance can be suppressed. It is to be noted that the power supply from power source unit 128 to wireless power supply device 113 is interrupted by power supply interruption operation unit 134 (see FIG. 8) connected to controller 129, for example.

In refrigerator 100 according to the present exemplary embodiment, door opening and closing unit 116 that automatically opens and closes at least one (vegetable compartment door 106a) of the plurality of doors may be provided to housing 101, and operation unit 121 that activates door opening and closing unit 116 may be provided to at least one (vegetable compartment door 106a) of the plurality of doors. In this case, refrigerator 100 according to the present exemplary embodiment may be configured such that power supply and data transfer to operation unit 121 are performed by wireless power supply device 113. According to this configuration in which operation unit 121 is provided to at least one (vegetable compartment door 106a) of the plurality of doors that is opened and closed by door opening and closing unit 116, a user does not need to operate an operation unit provided to a door other than the door (for example, vegetable compartment door 106a) to be opened and closed, whereby an interface having excellent operational usability can be mounted.

In addition, in refrigerator 100 according to the present exemplary embodiment, operation unit 121 is provided with, as an interface, a capacitive touch sensor sensitive to a user's touch operation, a resistive touch sensor that provides a light operational feeling, an optical distance sensor or human presence sensor, or a speech recognition device, for example. According to this configuration, even if the user carries groceries or the like in both hands and is difficult to hold a door handle to open the door, the user can opened and closed the door only by placing the back of the user's hand over operation unit 121 or by lightly touching operation unit 121 with a part of the user's body. Thus, a refrigerator having improved operability and UD performance can be provided.

### (Second exemplary embodiment)

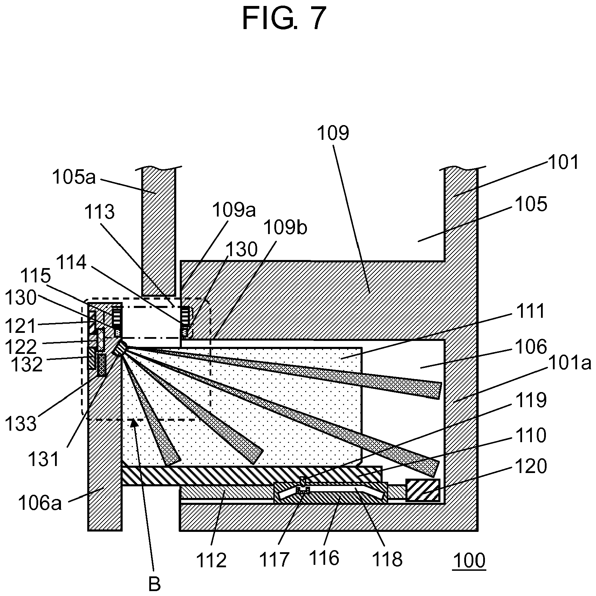

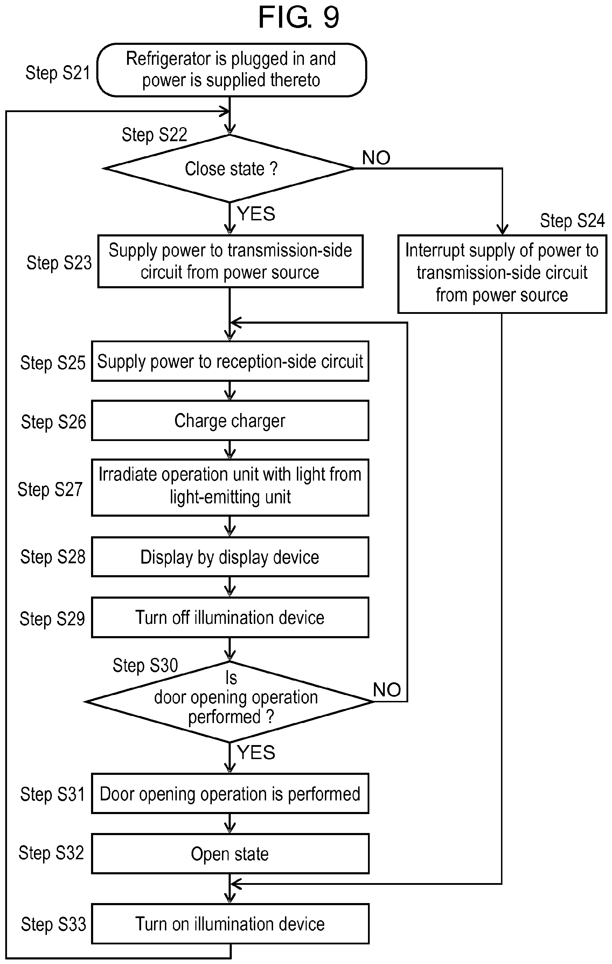

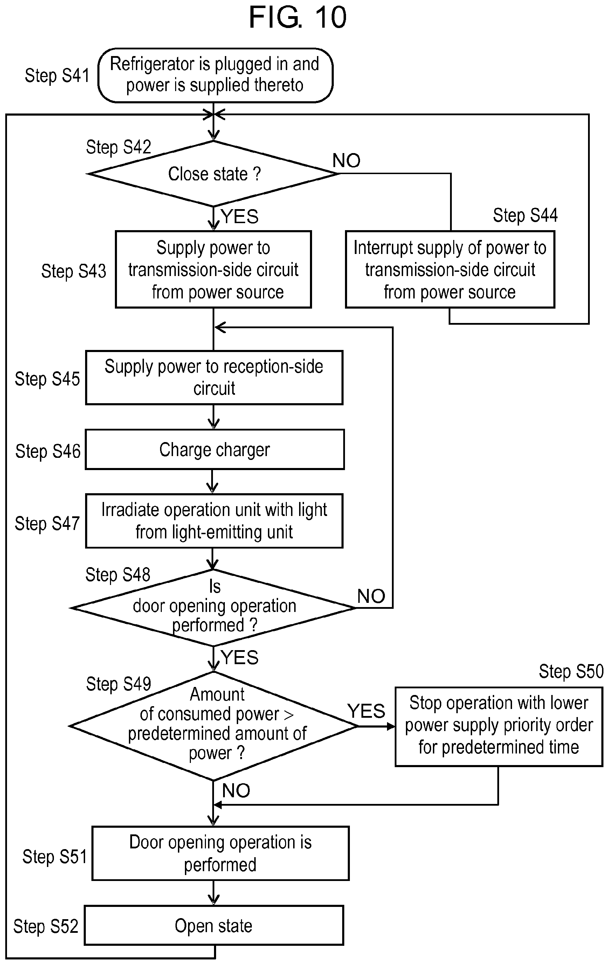

FIG. 7 is a longitudinal sectional view illustrating a vegetable compartment of refrigerator 100 according to a second exemplary embodiment of the present disclosure, in a state where a door is opened. FIG. 8 is a schematic diagram illustrating a configuration of part B, in FIG. 7, of the vegetable compartment according to the second exemplary embodiment of the present disclosure, and FIG. 9 is a flowchart illustrating an operation of the refrigerator according to the second exemplary embodiment of the present disclosure. FIG. 10 is a flowchart illustrating another operation of the refrigerator according to the second exemplary embodiment of the present disclosure.

It should be noted that constituent elements substantially identical to the constituent elements of refrigerator 100 in the first exemplary embodiment are denoted by the identical reference marks and will not be described in detail. In the present exemplary embodiment, only the configurations different from the first exemplary embodiment will be mainly described.

As illustrated in FIGS. 7 and 8, refrigerator 100 according to the second exemplary embodiment of the present disclosure is further provided with charger 133 inside vegetable compartment door 106a.

Refrigerator 100 according to the present exemplary embodiment may also be provided with illumination device 131 disposed on an upper part of an inner wall of vegetable compartment door 106a. Illumination device 131 is configured to have an installation angle adjusted such that the inside of vegetable compartment 106 is illuminated for allowing the user to easily see the inside of vegetable compartment 106 particularly when vegetable compartment door 106a is in an open state as illustrated in FIG. 7.

Refrigerator 100 according to the present exemplary embodiment may also be provided with display device 132 disposed on any area of a front surface of vegetable compartment door 106a.

Refrigerator 100 according to the present exemplary embodiment may also be provided with human presence sensor 135 that detects whether or not there is a user around refrigerator 100. In this case, when controller 129 determines that there is a user around refrigerator 100 based on the detection result (signal S11) of human presence sensor 135, power is supplied from transmission-side circuit unit 114 to reception-side circuit unit 115. In addition, in this case, in refrigerator 100 according to the present exemplary embodiment, the activation of wireless power supply device 113 is controlled by controller 129 such that: when there is a user around refrigerator 100, that is, when it is highly likely that vegetable compartment door 106a is opened by a user, wireless power supply device 113 is activated by controller 129 to wirelessly supply power; and in other cases, a time in which wireless power supply is not performed is set, for example. According to this configuration, different from a configuration in which power is constantly supplied by the wireless power supply device, a time in which the power supply is not performed is ensured when wireless power supply is not required, whereby power consumption can be reduced. Note that a known sensor such as an infrared sensor or an illuminance sensor can be used for human presence sensor 135. Further, human presence sensor 135 can be provided at a position where the presence of a human around refrigerator 100 can be detected, such as on a front surface of each door of refrigerator 100 or a side surface or a top surface of housing 101.

Next, an electric connection structure around wireless power supply device 113 will be described with reference to FIG. 8. In a state where vegetable compartment door 106a is closed, power supplied from power source unit 128 is transmitted to reception-side circuit unit 115 by way of transmission-side circuit unit 114, so that reception-side circuit unit 115 is supplied with power. Charger 133 receives signal S8 through secondary controller 125 of reception-side circuit unit 115, and is charged. Display device 132 and illumination device 131 also receive signal S7 and signal S6, respectively, from secondary controller 125, and can be controlled in a state where vegetable compartment door 106a is closed.

When vegetable compartment door 106a is opened, power supply to reception-side circuit unit 115 is interrupted, so that the control based on signal S6, signal S7, and signal S8 described above becomes impossible. Therefore, power is supplied from charger 133 which has been charged while the door is in a close state to the control load provided to vegetable compartment door 106a. In the present exemplary embodiment, power is supplied from charger 133 to display device 132 and illumination device 131 as signal S10 and signal S9, respectively, and therefore, display device 132 and illumination device 131 can be controlled even when the door is opened.

Hereinafter, the manner of operation and effects of refrigerator 100 having the above-mentioned configuration will be described with reference to the flowchart in FIG. 9. Note that the flowchart illustrating the operation of refrigerator 100 in FIG. 9 describes, as an example, the operation of refrigerator 100 provided with display device 132 and illumination device 131.

Firstly, when refrigerator 100 is plugged in and power is supplied to refrigerator 100, main body control circuit board 127 starts the operation in step S21. Next, in step S22, door opened and closed state detector 130 detects an opened and closed state of vegetable compartment door 106a, and determines whether or not vegetable compartment door 106a is in a close state. If vegetable compartment door 106a is in a close state, door opened and closed state detector 130 outputs information indicating that vegetable compartment door 106a is in a close state to controller 129 as signal S5, and the logic of the flowchart proceeds to step S23. If vegetable compartment door 106a is in an open state, door opened and closed state detector 130 outputs information indicating that vegetable compartment door 106a is in an open state to controller 129 as signal S5, and the logic proceeds to step S24. In step S23, controller 129 determines that vegetable compartment door 106a is in a close state, and activates power source unit 128 to output signal S1 for power supply to primary controller 123. Then, the logic proceeds to step S25. In step S24, controller 129 determines that vegetable compartment door 106a is in an open state, and interrupts supply of power from power source unit 128. Then, the logic proceeds to step S33.

Next, in step S25, an alternating current waveform with prescribed voltage and frequency is applied to primary coil 124 from primary controller 123 by controller 129 to induce an alternating current waveform on secondary coil 126. The induced voltage is rectified by secondary controller 125, and power is supplied to reception-side circuit unit 115.

The initial operation described above is almost the same as the processes from step S1 to step S5 in FIG. 6 described in the first exemplary embodiment.

Next, in step S26, signal S8 for power charging is output from secondary controller 125 to charger 133, whereby charger 133 is charged to a prescribed voltage.

In step S27, power and lighting information are output from secondary controller 125 to light-emitting unit 122 as signal S4. Light-emitting unit 122 disposed near operation unit 121 informs the user of the position of operation unit 121 by irradiating operation unit 121 with illumination such as LED, for example, with a color, a graphic, a lighting pattern, or the like, in order that the user can easily recognize the position of operation unit 121.

Then, in step S28, signal S7 for supplying power is output to display device 132 from secondary controller 125, and the door and the type of storage compartment to be operated by the user, for example, are displayed by display device 132 in characters or the like. Thus, the user is visually informed of the door and the type of storage compartment to be operated, for example. Further, the user can easily recognize the position of operation unit 121 by light emitted from display device 132, and this helps light-emitting unit 122 to indicate the position of operation unit 121.

Next, in step S29, since vegetable compartment door 106a is closed, illumination device 131 does not need to illuminate the inside of vegetable compartment 106, and thus, signal S6 for interruption of power is output to illumination device 131 from secondary controller 125, and illumination device 131 is turned off.

In step S29, illumination device 131 is turned off, assuming that illumination device 131 illuminates the inside of vegetable compartment 106. However, if illumination device 131 is provided on the front surface of vegetable compartment door 106a for illuminating the outside of refrigerator 100, illumination device 131 can be kept turned on. In this case, step S29 may be configured as a step where it can be selected whether illumination device 131 is turned off or kept turned on.

If refrigerator 100 is not provided with light-emitting unit 122 and display device 132, step S27 and step S28 are unnecessary. In this case, with steps S27 and S28 in FIG. 9 being skipped, the logic proceeds to step S29 if refrigerator 100 is provided with illumination device 131, and if not, proceeds to step S30.

In step S30, secondary controller 125 determines, based on signal S3 from operation unit 121, whether or not the user performs a door opening operation for opening vegetable compartment door 106a by operating operation unit 121. When secondary controller 125 determines that the user performs the door opening operation, the logic proceeds to step S31, and when secondary controller 125 does not determine that the user performs the door opening operation, the logic returns to step S25.

In step S31, information indicating that the door opening operation is performed is transmitted from secondary controller 125 to primary coil 124 by way of secondary coil 126 through data communication, and primary controller 123 further outputs information indicating that the door opening operation is performed to controller 129 as signal S2. Controller 129 activates door opening and closing unit 116 (see FIG. 7) to open the door based on signal S2.

Next, in step S32, door opened and closed state detector 130 confirms that vegetable compartment door 106a is in an open state.

In step S33, signal S9 for power supply is output from charger 133 to illumination device 131, so that the inside of vegetable compartment 106 is illuminated to the back with vegetable compartment door 106a being opened (see FIG. 7). Further, if display device 132 needs to be activated in the door open state in step S22, signal S10 for power supply may be output from charger 133 to display device 132.

Moreover, if the user intends to close vegetable compartment door 106a which is opened, power is supplied from charger 133 to operation unit 121. Then, information indicating that the door closing operation is performed on operation unit 121 may be transmitted, as a signal or data, to housing 101 from a wireless device or the like additionally mounted to refrigerator 100, for example, by using radio waves, and controller 129 may activate door opening and closing unit 116 to close vegetable compartment door 106a.

FIG. 10 is a flowchart illustrating another operation of the refrigerator according to the second exemplary embodiment of the present disclosure. In the operation flow of refrigerator 100 illustrated in FIG. 10, steps S41 to S47 are the same as steps S21 to S27 in the operation flow of refrigerator 100 illustrated in FIG. 9. Therefore, the operation in steps S41 to S47 will not be described, and only the operation after step S48 will be described below.

For simplifying the description, FIG. 10 illustrates the operation flow of refrigerator 100 which is not provided with display device 132 and illumination device 131. If refrigerator 100 is provided with display device 132 and illumination device 131, steps similar to steps S28 and S29 illustrated in FIG. 9 are added between step S47 and step S48 in FIG. 10. If refrigerator 100 is provided with one of display device 132 and illumination device 131, a step similar to corresponding one of steps S28 and S29 illustrated in FIG. 9 is added between step S47 and step S48 in FIG. 10. In addition, a step similar to step S33 in FIG. 9 is added after step S52 in FIG. 10.

In FIG. 10, in step S48, secondary controller 125 determines, based on signal S3 input from operation unit 121, whether or not the user performs a door opening operation for opening vegetable compartment door 106a by operating operation unit 121. When secondary controller 125 determines that the user performs the door opening operation, the logic of the flowchart proceeds to step S49, and when secondary controller 125 does not determine that the user performs the door opening operation, the logic returns to step S45.

In step S49, controller 129 determines whether or not the amount of consumed power of refrigerator 100 when the user performs the door opening operation for opening vegetable compartment door 106a exceeds a predetermined amount of power. When the amount of consumed power of refrigerator 100 exceeds the predetermined amount of power, the logic proceeds to step S50, and if not, the logic proceeds to step S51.

The reason why step S (step S49) for determining whether or not the amount of consumed power of refrigerator 100 when the door opening operation for opening vegetable compartment door 106a is performed exceeds a predetermined amount of power is to suppress a power source capacitance of refrigerator 100. Specifically, the amount of consumed power of refrigerator 100 is increased when an ice-maker, a cooling fan, and other components are activated. When the door opening operation for opening vegetable compartment door 106a is performed during an ice making operation or during the activation of the cooling fan or other components, power for wireless power supply is further required. In view of this, controller 129 determines whether or not the amount of consumed power of refrigerator 100 when the door opening operation for opening vegetable compartment door 106a is performed exceeds the predetermined amount of power, and when it is determined that the amount of consumed power exceeds the predetermined amount of power, the logic proceeds to step S50. Then, in step S50, controller 129 performs power supply control such that power supply to an operation with a lower power supply priority order is stopped for a predetermined time. For example, the operation for opening vegetable compartment door 106a is given a higher power supply priority order than the ice making operation. Thus, when the operation for opening vegetable compartment door 106a is performed during the ice making operation, controller 129 stops the ice making operation. As described above, a power supply priority order for supplying power required for the operation of each device in refrigerator 100 is set to controller 129 in advance. Controller 129 performs power supply control such that, when an operation with a higher power supply priority order is performed, power supply to an operation with a lower power supply priority order is stopped.

Note that the predetermined amount of power is set, as appropriate, to an amount of power not exceeding the power source capacitance when a device requiring power supply is operated in refrigerator 100.

According to this configuration, wireless power supply device 113 can be activated, as appropriate, without increasing the power source capacitance of refrigerator 100. Thus, the power source capacitance of refrigerator 100 can be suppressed.

If the amount of consumed power of refrigerator 100 when the operation for opening vegetable compartment door 106a is performed does not exceed the predetermined amount of power in step S49, the logic proceeds to step S51 where the operation for opening vegetable compartment door 106a is performed as in step S31 in FIG. 9. Then, in step S52, vegetable compartment door 106a is in an open state as in step S32 in FIG. 9.

As described above, refrigerator 100 according to the present exemplary embodiment is provided with charger 133 on reception-side circuit unit 115 of wireless power supply device 113 on drawer-type vegetable compartment door 106a. According to this configuration, even when vegetable compartment door 106a is in an open state, the control load such as operation unit 121 and display device 132 can be operated by supply of power from charger 133. In addition, according to this configuration, even when vegetable compartment door 106a is in an open state, operation unit 121 for activating door opening and closing unit 116 to close vegetable compartment door 106a can be electrically activated, whereby the operation for closing vegetable compartment door 106a, which is in an open state, can be performed with a light operational feeling.

Further, refrigerator 100 according to the present exemplary embodiment may also be provided with display device 132 on drawer-type vegetable compartment door 106a. In this case, power is supplied to display device 132 by wireless power supply device 113, whereby a visual display is provided on the surface of vegetable compartment door 106a. According to the configuration described above, the user can recognize at once the position where operation unit 121 is installed by illumination and character display, whereby a convenient automatic door opening and closing function can be implemented. In addition, each door can be provided with a display visually indicating the inside condition of the door (for example, a display indicating that this is a vegetable compartment, or a display indicating the condition inside the vegetable compartment), and therefore, even if refrigerator 100 has doors of the same shape, a trouble such as the user mistakenly recognizing a wrong door as the door to be opened can be reduced.

Further, refrigerator 100 according to the present exemplary embodiment may also be provided with illumination device 131 on drawer-type vegetable compartment door 106a. According to the configuration described above, power can be supplied to illumination device 131 by wireless power supply device 113. Thus, the inside of vegetable compartment 106 or the outside of refrigerator 100 which is the inside of a room where refrigerator 100 is installed can be illuminated by illumination device 131, for example. Accordingly, even when vegetable compartment door 106a is in an open state, the inside of vegetable compartment 106 is illuminated, whereby visibility of groceries in the storage compartment can be improved, and further, the user does not need to open the door for confirming the condition in the storage compartment, so that the number of times of opening the door can be reduced, by which the reduction in power consumption can be implemented. In addition, illumination device 131 can be used as a foot-side illumination for illuminating the outside of refrigerator 100 by appropriately changing the installation position of illumination device 131 to the front surface of vegetable compartment door 106a, for example, whereby illumination device 131 can be used as a foot light at night. Thus, safety as well as usability can be improved.

It should be noted that, according to the present disclosure, an electric load can also be mounted to a door as described above, and therefore, a refrigerator having a configuration described below can also be provided in addition to a refrigerator having the configuration described in the above exemplary embodiments.

Specifically, refrigerator 100 according to one example of the exemplary embodiments of the present disclosure may be configured such that, when wireless power supply device 113 malfunctions due to disconnection of at least one of primary coil 124 and secondary coil 126, for example, power can be supplied to the control load such as display device 132 and light-emitting unit 122 from charger 133 which has been charged by wireless power supply. According to this configuration, display device 132 can provide notification regarding wireless power supply device 113 being in failure, or light (LED, for example) indicating abnormality can be turned on in light-emitting unit 122. Notably, whether an abnormality such as disconnection of at least one of primary coil 124 and secondary coil 126 has occurred or not is determined by controller 129 based on a change in a current value of the primary coil, for example.

Refrigerator 100 according to one example of the exemplary embodiments of the present disclosure may also be provided with an imaging device, such as a camera, on an inside wall surface of the door. In the configuration described above, power is supplied to the imaging device from charger 133 which has been charged by wireless power supply, whereby an image of the inside of refrigerator 100 can be captured by the imaging device provided on the door, and further, stock control is enabled by displaying the captured image on display device 132, for example.

Refrigerator 100 according to one example of the exemplary embodiments of the present disclosure can also be provided with, on the front surface of the door, human presence sensor 135 and illumination device 131 which is activated by controller 129 based on the detection result of human presence sensor 135 (see FIG. 8). According to this configuration, when human presence sensor 135 detects that there is a person around the door, controller 129 activates illumination device 131 to illuminate the areas around the refrigerator. Thus, as described above, a user can ensure illumination (for example, foot light) around refrigerator 100 without moving around a dark room at night to push a switch for illumination in the room where refrigerator 100 is installed.

Refrigerator 100 according to one example of the exemplary embodiments of the present disclosure may also be configured such that, when human presence sensor 135 detects that there is no person around refrigerator 100 for a predetermined time, controller 129 transmits, to power supply interruption operation unit 134 (see FIG. 8), signal S12 for interruption of power supply to cause power supply interruption operation unit 134 to interrupt the supply of power from power source unit 128. According to this configuration, when controller 129 determines that charger 133 is sufficiently charged because there is no person around refrigerator 100 and the operation for opening the door is not performed for a predetermined time, for example, the power supply from power source unit 128 is stopped by power supply interruption operation unit 134. Thus, power consumption is suppressed, resulting in that the consumed power can be decreased and an increase in the power source capacitance can be suppressed.

Refrigerator 100 according to one example of the exemplary embodiments of the present disclosure may be provided with a speech recognition device on the front surface of the door. According to the configuration described above, power is supplied to the speech recognition device from charger 133 which has been charged by wireless power supply. For example, if the user says "open" or "close" to the speech recognition device, the speech recognition device detects the word, and controller 129 activates door opening and closing unit 116 to open or close the predetermined door.

Refrigerator 100 according to one example of the exemplary embodiments of the present disclosure may also be provided with, on the front surface of the door, a terminal or the like used for charging a mobile phone or the like, or an interface for performing communication with a mobile device such as a mobile phone. According to this configuration, a mobile phone or the like can be charged by using power supplied to the door of refrigerator 100, and moreover, a grocery list created on a mobile device such as a mobile phone can be displayed on the display device. Thus, usability can further be improved.

### INDUSTRIAL APPLICABILITY

The present disclosure enables installing an electric load, such as an interface for activating an automatic door opening device, to a door which is difficult to have an electric connection using a harness or the like, thereby capable of providing a refrigerator having excellent operability. Accordingly, the present disclosure is widely applicable not only to household refrigerators and industrial refrigerators having doors but also to freezer showcases, refrigerated showcases, and storages that do not need temperature control, for example.

### REFERENCE MARKS IN THE DRAWINGS

101: housing
101a: rear wall (of housing)
101b: side wall (of housing)
102: refrigerating compartment
102a: refrigerating compartment door
103: ice making compartment
104: switching compartment
105: freezer compartment
105a: freezer compartment door
106: vegetable compartment
106a: vegetable compartment door
108: display operation unit
109: heat insulating partition plate
109a: heat insulating partition plate front surface
109b: inner surface (of heat insulating partition plate)
110: frame
111: storage case
111a: storage case rear wall
111b: storage case side wall
112: drawer rail
113: wireless power supply device
114: transmission-side circuit unit
115: reception-side circuit unit
116: door opening and closing unit
117: link
118: guide
119: protrusion
120: airtightness holding mechanism
121: operation unit
122: light-emitting unit
123: primary controller
124: primary coil
125: secondary controller
126: secondary coil
127: main body control circuit board
128: power source unit
129: controller
130: door opened and closed state detector
131: illumination device
132: display device
133: charger
134: power supply interruption operation unit
135: human presence sensor
136: spring

## Claims

1. A refrigerator comprising:
a housing formed of a heat insulating wall;
a plurality of storage compartments provided in the housing;
a plurality of doors which openably closes the plurality of storage compartments; and
a wireless power supply device that supplies power for opening and closing at least one of the plurality of doors, the wireless power supply device including a transmission-side circuit unit and a reception-side circuit unit,
wherein the transmission-side circuit unit is disposed to the housing, and the reception-side circuit unit is disposed to the at least one of the plurality of doors.

2. The refrigerator according to claim 1, wherein
the transmission-side circuit unit has a primary coil which is disposed inside of or on a surface of a wall of the housing facing the at least one of the plurality of doors, and
the reception-side circuit unit has a secondary coil which is disposed inside of or on a surface of a wall of the at least one of the plurality of doors at a position facing the primary coil.

3. The refrigerator according to claim 1 or 2, wherein
a door opened and closed state detector that detects an opened and closed state of the at least one of the plurality of doors is provided to at least one of the housing and the at least one of the plurality of doors, and
the wireless power supply device is controlled based on a signal from the door opened and closed state detector.

4. The refrigerator according to any one of claims 1 to 3, wherein
a door opening and closing unit that automatically opens and closes the at least one of the plurality of doors is provided to the housing,
an operation unit that operates an action of the door opening and closing unit is provided to the at least one of the plurality of doors, and
power is supplied to the operation unit from the wireless power supply device.

5. The refrigerator according to any one of claims 1 to 4, wherein
the at least one of the plurality of doors is provided with a display device configured to provide a visual display on a surface of the at least one of the plurality of doors, and
power is supplied to the display device by the wireless power supply device.

6. The refrigerator according to any one of claims 1 to 5, wherein
a charger is provided to the reception-side circuit unit of the wireless power supply device on the at least one of the plurality of doors, and
a control load provided to the at least one of the plurality of doors is activated by supply of power from the charger, even when the at least one of the plurality of doors is in an open state.

7. The refrigerator according to any one of claims 1 to 6, wherein
the at least one of the plurality of doors is provided with an illumination device,
power is supplied to the illumination device by the wireless power supply device, and
the illumination device illuminates an inside of or outside of a storage compartment having the at least one of the plurality of doors from among the plurality of storage compartments.

8. The refrigerator according to any one of claims 1 to 7, wherein the at least one of the plurality of doors is a drawer door.
